# EUROPEAN PATENT APPLICATION

(11) **EP 4 737 695 A1**
(43) Date of publication of application: **06.05.2026**
(21) Application number: 24210893.4
(22) Date of filing: 05.11.2024
(51) Int. Cl.: F01L 1/053, F01L 1/18, F01L 13/00, F02M 23/00, F02B 31/06, F02D 41/00, F01L 1/26

(54) **INTAKE SYSTEM FOR INTERNAL COMBUSTION ENGINE WITH FLOW CONTROL SLIDER**

(71) Applicant: Eisenbeis, Uwe, 85630 Harthausen (DE)
(72) Inventor: Eisenbeis, Uwe, 85630 Harthausen (DE)
(74) Representative: Zimmermann & Partner Patentanwälte mbB

(57) **Abstract**

An intake system (1) for an internal combustion engine is provided. The intake system comprises an intake valve (70) for controlling the flow of a combustion gas into a cylinder of the internal combustion engine; a valvetrain (2) for actuating the intake valve (70); an inlet duct (170) leading to the intake valve (70) for guiding the combustion gas via the intake valve to the cylinder; a slider cavity (164) arranged at a side wall (172) of the inlet duct; a flow control slider (180) being accommodated in the slider cavity (164) and being translationally slidable between an extended position and a retracted position, and an additional gas supply system (160) passing through the slider cavity (164). In the extended position, the flow control slider (180) extends with a protruding portion (185) from the slider cavity (164) into the inlet duct (170) for shaping a flow of the combustion gas. In the retracted position, the flow control slider (180) is retracted, relative to the extended position, into the slider cavity (164).

## Description

The invention relates to an intake system for an internal combustion engine.

### Technical background

Internal combustion engine, especially for vehicles, are operated under a variety of conditions and need to perform adequately well under these conditions. These conditions include full-load and partial load conditions, and in addition also low-flow conditions such as idling or low load.

A variable valvetrain adapted to allow high performance as well as high fuel efficiency under a variety of such operation conditions is described in EP 1712747 A1 and a number of related applications cited further below. The present invention is based on the valvetrain described therein and regards an improvement of this valvetrain.

Each of the various operation conditions of the combustion engine bring their own challenges. In particular, the low flow through the intake system may not automatically lead to a sufficiently well-mixed air-fuel mixture into the combustion chamber while the intake valves are open, so that imperfect combustion, and as a consequence, deteriorated combustion stability and fuel economy may result. Another challenge is the response time in response to a throttle command, as this response time may be delayed due to the low gas flow though the intake system.

It is known that in these low-flow conditions, the combustion can be improved by controlling the turbulence within the combustion chamber of the fuel and air mixture immediately prior to combustion. Especially under low-flow conditions, the additional turbulences may improve the part-throttle / idle stability and the fuel economy.

On the other hand, under high-flow conditions such as high or full load, high rate of gas flow directly into the cylinder is desirable. Under these conditions, the additional turbulences may lead to a deteriorated engine performance.

In view of the above, various schemes for selectively introducing turbulences in the inlet system have been proposed. For example, EP 0521921 A1 describes an inlet arrangement including means such as a rotary member for varying the direction of gas flow past a respective intake valve. Other proposals are described in AT 521714 A1, DE 102011016644 A1, EP 0616116 A2, DE 10220340 A1, and DE 102007020926 A1.

However, there is still room for additional improvements.

### Summary of the invention

In view of the above, an intake system according to claims 1 and an internal combustion engine according to claim 15 are provided.

According to the invention, the intake system comprises: an intake valve for controlling the flow of a combustion gas into a cylinder of the internal combustion engine; a valvetrain for actuating the intake valve; an inlet duct leading to the intake valve for guiding the combustion gas via the intake valve to the cylinder; a slider cavity (164) arranged at a side wall (172) of the inlet duct; and a flow control slider being accommodated in the slider cavity and being translationally slidable between an extended position and a retracted position. In the extended position, the flow control slider extends with a protruding portion from the slider cavity into the inlet duct for shaping a flow of the combustion gas. In the retracted position, the flow control slider is retracted, relative to the extended position, into the slider cavity. Furthermore, the intake system comprises an additional gas supply system passing through the slider cavity.

An advantage of embodiments is that the flow control slider may re-direct the flow of intake gas and introduce additional turbulences when needed, but may be retracted when these additional turbulences are undesired. Furthermore, the additional gas supply system may further improve the gas flow, and in addition may allow for improved response time. According to embodiments, the above advantages are possible within a simple and compact setup.

Further advantages, features, aspects and details that can be combined with embodiments described herein are evident from the dependent claims, the description and the drawings.

### Brief description of the Figures:

The details will be described in the following with reference to the figures, wherein
- Fig. 1: is a cross-sectional side view of an intake system according to an embodiment, with flow control slider in a retracted position;
- Fig. 2: is a cross-sectional side view of the intake system of Fig. 1 with flow control slider in an extended position;
- Fig. 3: is a perspective view of the intake system according to an embodiment;
- Fig. 4: is a perspective view into the inlet duct of the intake system according to the embodiment of Fig. 3;
- Fig. 5: is a side view of an intake system according to an embodiment, with flow control slider in a retracted position; and
- Fig. 6: is a cross-sectional side view of the intake system of Fig. 5 with flow control slider in an extended position.

### Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment or aspect can be used on or in conjunction with any other embodiment or aspect to yield yet a further embodiment or aspect. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well.

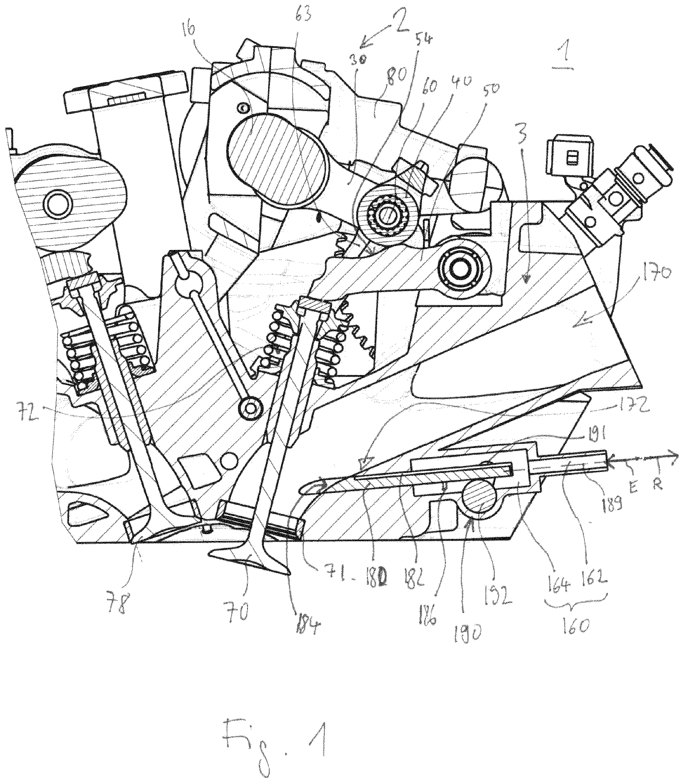

Fig. 1 is a cross-sectional side view of an intake system according to an embodiment. The intake system 1 is arranged in a cylinder head portion of the combustion engine and includes the cylinder head 3.

The intake system 1 further includes an intake valve 70 which is movable downwards, against the force of a valve spring 72, thereby opening the valve 70 for letting a flow of combustion gas (fuel-air-mixture) into a combustion chamber of the internal combustion engine. The combustion chamber (cylinder with piston) is not shown in Fig. 1, and is arranged in the usual manner below the valve 70. When the force pushing the valve 70 downwards is released, the valve 70 can be closed by the valve spring 72 pushing the valve 70 upwards into a valve seat 71.

The intake system 1 further includes a valvetrain 2 for actuating the intake valve 70, i.e., pushing and releasing a valve stem of the intake valve 70 for opening and closing the intake valve 70. The valvetrain 2 is a variable valvetrain adapted for continuously adjusting a valve lift of the intake valve 70.

The valvetrain 2 has an actuation system for periodically opening and closing the valve 70. The actuation system comprises a valve crank 16, which is mounted in a rigid support body 80 to be rotatable about a valve crank axis 14.

The valvetrain 2 further has a transmission unit for transmitting the rotational movement of the valve crank 16 into a periodical lifting movement for actuating the valve 70. The transmission unit comprises a guiding member 60 and a connecting rod 30 coupled between the valve crank 16 and the guiding member 60. The guiding member is mounted on a guiding member shaft 63 pivotably mounted in the cylinder head 3. The transmission unit further comprises a pushing member 40 fastened to the guiding member 60, and a transmission member 50 in mechanical contact with the pushing member 40 along a contact surface 54 for transmitting a force exerted by the pushing member 40 towards the valve 70.

The support body 80 is pivotable, and pivoting of the support body 80 causes a change in the position of the valve crank axis 14 for adjusting the valve lift.

Further details of the valvetrain are described in EP 1712747 A1, which is incorporated by reference herein. Yet further details and improvements of the valvetrain are described in EP 2906789, EP 3408507 A1, WO 2017/129820 A1, and EP 3853448 A1, which are also incorporated by reference herein.

Also shown in Fig. 1 is an exhaust system with an exhaust valve 78 arranged in the cylinder head 3. This exhaust system is provided in a known manner, and its details are of no particular relevance to the invention.

The intake system 1 further includes an inlet duct 170 leading from an air inlet to the intake valve 70 for guiding a combustion gas (air and/or air-fuel mixture) via the intake valve 70 into the cylinder. The inlet duct is provided as a channel through the cylinder head 3 and has a straight portion and a curved portion extending to the valve seat 71.

The intake system 1 further includes a slider cavity 164 arranged at a side wall 172 of the inlet duct 170; and a flow control slider 180 accommodated in the slider cavity 164 and being translationally slidable between an extended position and a retracted position (out of and into the slider cavity 164).

Fig. 1 shows a configuration with the flow control slider 180 being in the retracted position. In this position, the flow control slider 180 is retracted into the slider cavity 164 (completely retracted or at least more retracted than in the extended position). As shown in Fig. 1, the flow control slider 180 is retracted in such a manner that a distal portion 184 of the flow control slider 180 is flush with the side wall of the inlet duct 170.

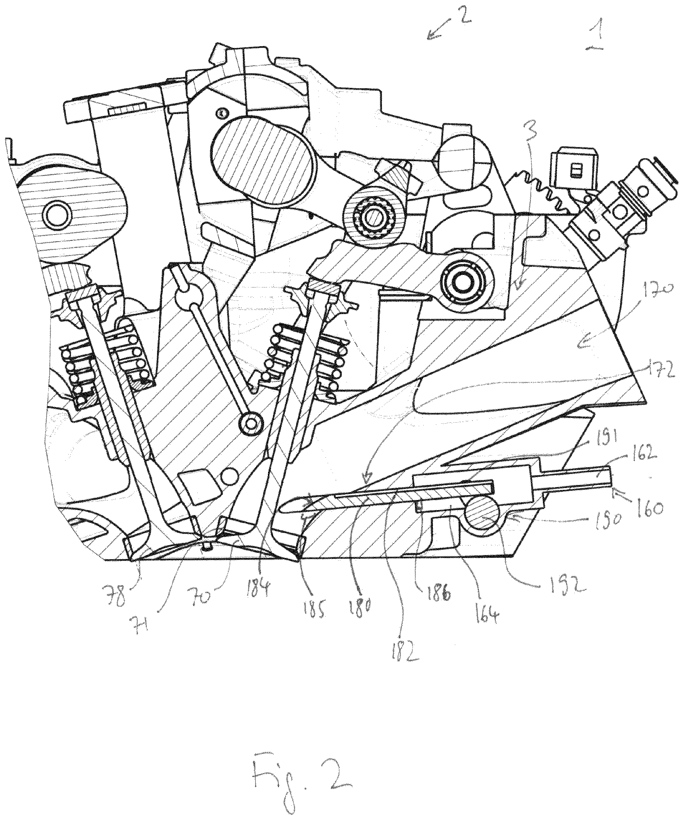

Fig. 2 shows the intake system of Fig. 1 with flow control slider 180 being in the extended position (extending further into the inlet duct 170 than in the retracted position), but otherwise with the description of Fig. 1 also applying to Fig. 2. In the extended position of Fig. 2, the flow control slider 180 extends with a protruding portion 185 from the slider cavity 164 into the inlet duct 170.

By sliding the flow control slider 180 in the extended position as shown in Fig. 2, it is possible to shape the flow of the combustion gas into the combustion chamber. In particular, in the extended position, the protruding portion 185 extending into the inlet duct 170 guides the combustion gas flow at an angle into the combustion chamber thereby creating a swirl-flow and additional turbulences. Furthermore, by constricting the flow cross section, the protruding portion 185 leads to an increased flow velocity and additional turbulences due to a nozzle effect. Thereby, the mixture of fuel and air are improved, leading to an improved stability and fuel economy especially under part-throttle and/or idle operation conditions.

On the other hand, sliding the flow control slider 180 in the retracted position as shown in Fig. 1, the turbulences and the nozzle effect described above are avoided. This is desirable under high-flow conditions such as high or full load. Under these conditions the gas flow into the cylinder is unhindered by the constriction and turbulence of the extended position, and thus a high rate of combustion gas flow allows an enhanced engine performance.

For sliding the flow control slider 180 between the retracted position of Fig. 1 and the extended position as shown in Fig. 2 (in direction R towards the retracted position and in direction E towards the extended position), the intake system 1 further includes an actuator system 190. The actuator system 190 is configured for actuating the movement of the flow control slider 180 between the extended position and the retracted position.

For this purpose, the actuator system comprises a rotatable actuation shaft 192 and a transmission system 191 for transmitting a rotation of the actuation shaft 192 into a translational sliding motion of the flow control slider 180. The transmission system 191 comprises a crank eccentrically fixed to the actuation shaft 192 and connected to the flow control slider 180. Thereby, by rotation of the actuation shaft 192, the flow control slider 180 is moved between the retracted position of Fig. 1 and the extended position as shown in Fig. 2.

The flow control slider 180 further has a stopper 186 for limiting a movement of the flow control slider 180 into the inlet duct beyond the extended position. Likewise, a stopper (not shown) may limit a movement of the flow control slider 180 into slider cavity 164 beyond the retracted position.

The flow control slider 180 allows shaping a flow of the combustion gas by being moved between the retracted and extended positions. At the same time, due to the sliding motion, the flow control slider 180 may be provided with minimum spatial requirements near the valve 70 (near the valve seat 71). Thereby, the flow control slider 180 can be positioned close to the valve 70 (valve seat 71) while taking up litte space in this relatively narrow part of the intake system 1. In particular, it becomes possible to actuate the flow control slider 180 by an actuation system that may be arranged at a less narrow part of the intake system 1. Thus, undue restrictions on the actuation system and/or the overall geometry can be avoided. For example, it becomes possible to provide an actuation shaft 192 extending along a plurality of cylinders, without interfering with other elements of the intake system 1.

The intake system 1 further includes an additional gas supply system 160 passing through the slider cavity 164. The gas supply system provides additional combustion gas (e.g., air) through the slider cavity 164 and past the flow control slider 180 into slider cavity 164.

The flow of the additional combustion gas may advantageously be influenced by the flow control slider 180 and its position. For example, when the flow control slider 180 is positioned in the retracted position shown in Fig. 1, the flow control slider 180 may block an additional gas flow through the additional gas supply system 160 into the inlet duct 170. In contrast, when positioned in the extended position shown in Fig. 2, the flow control slider 180 may allow an additional gas flow through the additional gas supply system 160 into the inlet duct 170. Herein, "blocking" and "allowing" a gas flow are not necessarily absolute terms but relative to each other, e.g., even in the retracted position shown in Fig. 1, it not required to block any additional gas flow through the additional gas supply system 160 in a completely gas-tight manner, but it is sufficient if the gas flow is blocked substantially more than in the extended position of the flow control slider 180.

For influencing the flow of the additional combustion gas by the flow control slider 180 and its position, in the embodiment of Figs. 1 and 2 the flow control slider 180 comprises a channel recess 182. The channel recess 182 recesses from a top (upstream regarding the flow along the inlet duct 170) side of the flow control slider 180. The channel recess 182 extends along the direction of movement between the extended and retracted position (E and R in Fig. 1) and thereby defines a channel for the additional gas flow into the inlet duct 170.

The channel defined by the channel recess 182 is separated from (does not fully extend to) the distal portion 184 of the flow control slider 180, so that the channel is closed when the flow control slider 180 is positioned in the retracted position as shown in Fig. 1, and is open when the flow control slider 180 is positioned in the extended position as shown in Fig. 2.

Furthermore, when the flow control slider 180 is positioned in an intermediate position between the retracted and extended position, the channel defined by the channel recess 182 opens up gradually more and more in proportion to the degree in which the flow control slider 180 is moved towards the extended position.

The additional gas supply system 160 may receive the additional gas from any source. For example, the additional gas supply system 160 may be an exhaust gas recirculation system transporting exhaust gas received from an exhaust portion of the internal combustion engine.

In another example, the additional gas supply system 160 may receive inlet gas (such as air, in particular filtered air). In this case, the additional gas supply system 160 may be regarded as an additional inlet gas channel. The additional inlet gas channel 160 has, in this case, preferably a smaller cross-section (defined as the smallest cross-section) than the (main) inlet duct 170, in any position of the flow control slider 180.

The additional inlet gas channel may for example receive air from an air filter, in particular an activated carbon filter (same as or different from the inlet duct (170)). The additional inlet gas channel may for example be a bypass channel receiving inlet gas from an upstream branching portion of the intake system, the upstream branching portion being preferably arranged upstream of a throttle valve and/or fuel injector of the intake system and/or downstream of an air filter of the intake system.

By introducing an additional gas flow through the additional gas supply system 160 in this manner, it turns out that the effect of the flow control slider 180 is further enhanced in a synergistic manner. The additional gas flow further contributes to the desired deflection and to the turbulences already introduced by the flow control slider 180, and may thereby further enhance the stability and fuel efficiency under the low-flow conditions. This effect is particularly pronounced by the channel recess 182 being arranged at an upstream (regarding the flow along the inlet duct 170) side of the flow control slider 180, because thereby the additional gas flow further benefits from being shaped by the flow control slider 180.

In addition, the additional gas from the additional gas supply system 160 at least partially compensates for the reduced flow cross section in the extended position of the flow control slider 180.

The flow control slider 180, in turn, also has a beneficial effect on the extraction of the additional gas flow and in particular enhances the extraction of the additional gas from the additional gas supply system 160. This enhanced extraction is achieved by the Venturi effect: In the extended position of the flow control slider 180, a constriction in the intake channel region leads to a high flow velocity causing an underpressure. This underpressure enhances the extraction of the additional gas from the additional gas supply system 160. In addition, the channel defined by the channel recess 182 opens up more and more in proportion to the degree in which the flow control slider 180 is moved towards the extended position, and this effect further contributes to enhancing the extraction of the additional gas from the additional gas supply system 160 in proportion to the flow control slider 180 being extended.

In addition, the effects of the flow control slider 180 and of the additional gas from the additional gas supply system 160 do not only enhance each other, but they can be controlled jointly in a simple manner, i.e., by sliding the flow control slider 180. Thereby, a simple control scheme without any additional complications due to the additional gas supply system 160 may be used.

Another possible advantage of the additional gas from the additional gas supply system 160 is that it is positioned in relatively close proximity to the intake valve 70. Thereby, by adjusting the flow of additional gas from the additional gas supply by actuating movement of the flow control slider 180, the gas supply into the intake valve 70 can be adjusted with a relatively fast response time (in comparison to the longer response time of inlet gas being regulated by a standard throttle valve, for example), even under low-flow conditions. Thereby, the gas flow especially in transient conditions may be improved, and it may be more reliably ensured that for example sufficient inlet gas is provided for sufficiently purging the cylinder of exhaust products.

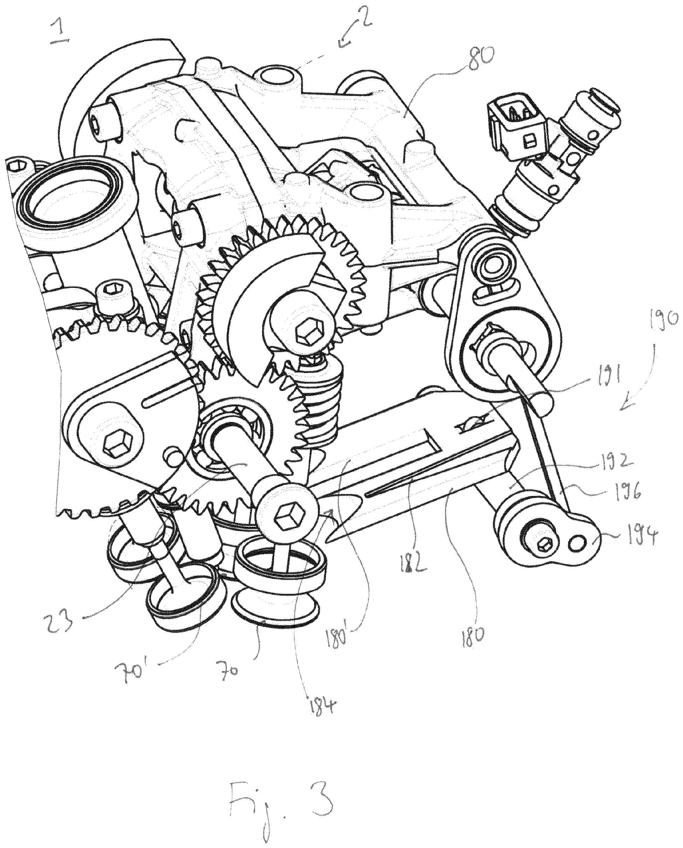

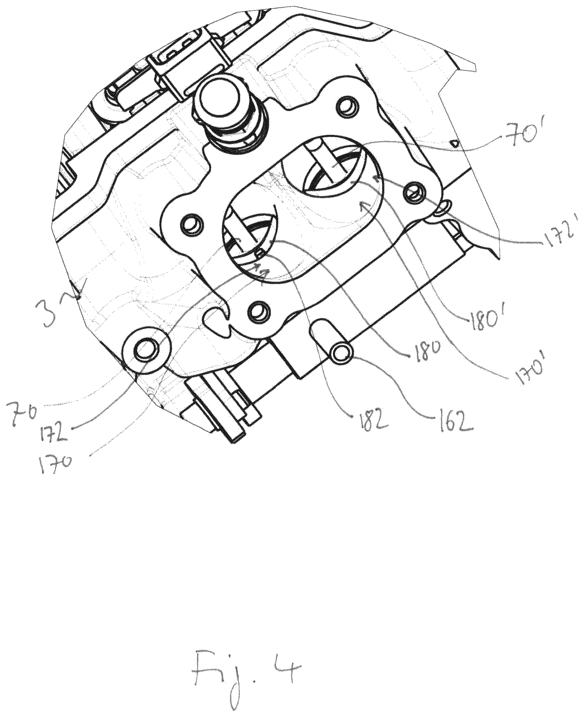

Figs. 3 and 4 are a perspective views of the intake system according to a further embodiment. The embodiment of Figs. 3 and 4 may be provided with any or all of the elements shown in Fig. 1 and 2, and the description of Figs. 1 and 2 may therefore also apply to the embodiment of Figs. 3 and 4. In Fig. 3, the cylinder head 3 is not shown for purposes of illustration, but is shaped in analogy to that shown in Figs. 1 and 2. A perspective view including the cylinder head 3 is shown in Fig. 4.

In addition, Figs. 3 and 4 illustrate a number additional details, described in the following. These details may be included individually or in combination in the embodiment of Figs. 1 and 2, too.

As already described with respect to Fig. 1, the variable valvetrain 2 allows adjusting a valve lift by pivoting the support body 80. For this purpose, the support body 80 is pivotably mounted on a pivot shaft 23. By pivoting of the support body 80 about the pivot shaft 23 (more precisely about a pivot axis defined by the pivot shaft 23), the position of a rotational axis of the valve crank 16 (see Fig. 1) is changed for adjusting the valve lift.

Further, the actuator system 190 is coupled to the variable valvetrain 2 for actuating the movement of the flow control slider 180 in dependence of the adjustment of the valve lift by the variable valvetrain 2. This is achieved by the actuator system 190 coupling the actuator system 190, in particular the actuator shaft 192, to the variable valvetrain 2, in particular to the pivotable support body 80, for adjusting the angle of the actuator shaft 192 in dependence of the pivoting angle of the support body 80. Thereby, the actuation shaft 192 is coupled to the variable valvetrain for being rotated by an adjustment of the valve lift, in particular by a pivoting of the support body 80.

In the embodiment of Fig. 3, this coupling is achieved by an actuation rod 196 having a first end coupled to the support body 80 and a second end coupled via a crank 194 the actuation shaft 192. Thereby, the actuation rod 196 rotates, via the crank 194, the actuation shaft 192 when the support body 80 is pivoted.

A further detail illustrated in Figs. 3 and 4 is that the intake system 1 comprises a pair of intake valves (first and second intake valve) 70, 70', for controlling the flow of a combustion gas into the same cylinder (below the valves 70, 70', not shown) of the internal combustion engine. Correspondingly, the intake system 1 comprises a pair of (first and second) inlet ducts 170, 170' (see Fig. 4) respectively leading to the first and second intake valves 70, 70'. Furthermore, the intake system 1 comprises a pair of (first and second) flow control sliders 180, 180' accommodated in respective slider cavities in a side wall 172, 172' of the respective inlet duct 170, 170'.

As illustrated in Fig. 3, the pair of first and second flow control sliders 180, 180' may be rigidly connected to each other, so that they can be actuated together.

Another detail illustrated in Fig. 3 is that the pair of first and second flow control sliders 180, 180' are asymmetrical with respect to each other. In particular, the first flow control slider 180 may have a channel recess 182 not present in the second flow control slider 180'. This asymmetry further enhances a swirl motion of the intake gas and may therefore enhance the beneficial effects of the intake system, especially at low-flow conditions.

Another detail illustrated in Fig. 3 is that the channel recess 182 may be tapered, to have a smaller cross section at a distal end and a larger cross section at a proximal end. This tapering further contributes to the channel defined by the channel recess 182 opening up more and more in proportion to the degree in which the flow control slider 180 is moved towards the extended position (here even possibly more than linearly).

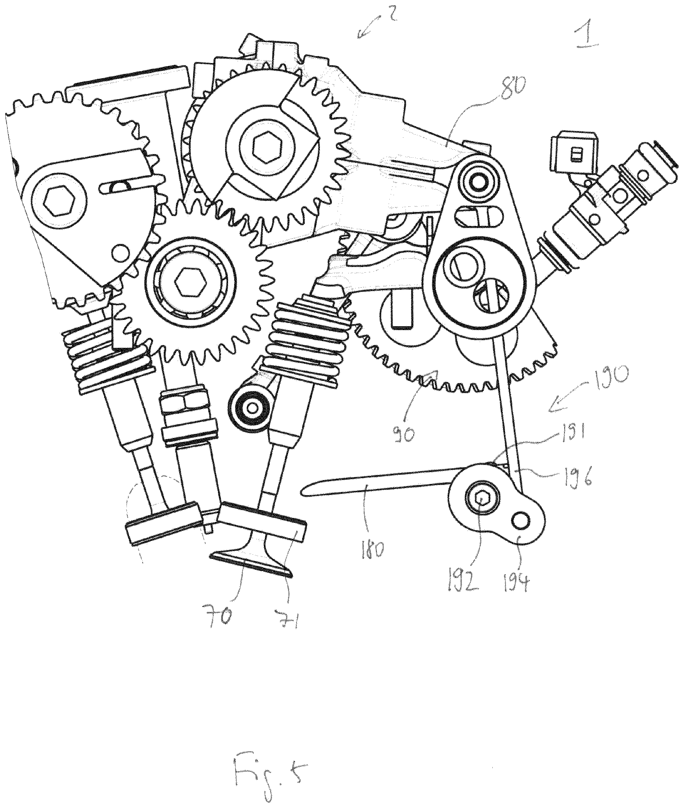

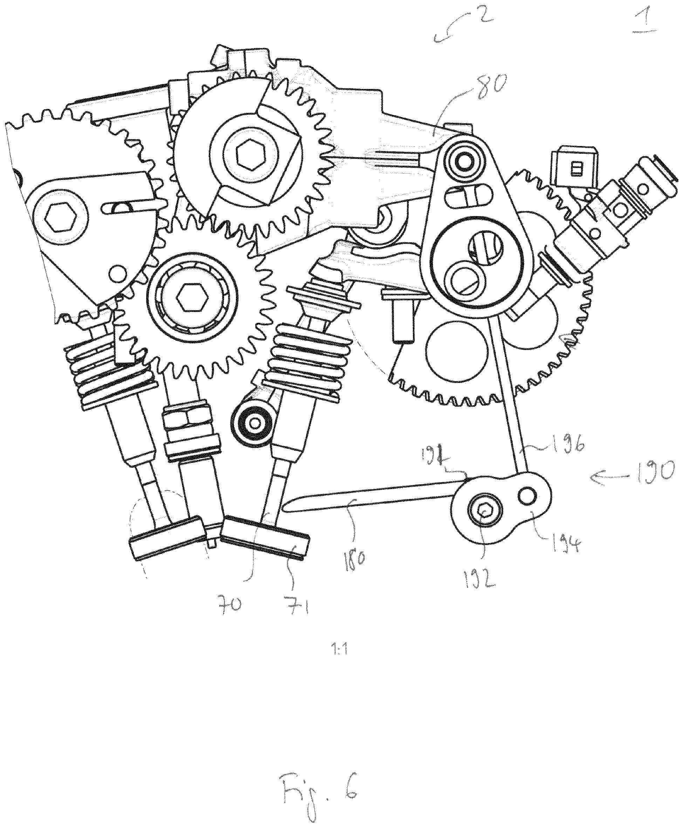

Figs. 5 and 6 are side views of an intake system 1 according to a further embodiment. Like in Fig. 3, these Figures do not show the cylinder head 3. Fig. 5 shows the intake system 1 with the flow control slider 180 in a retracted position; and Fig. 6 with the flow control slider 180 in an extended position. Otherwise the description of Figs. 3 and 4 applies to Figs. 5 and 6, too.

The embodiments shown in the Figures may be varied in a number of respects. For example, the variable valvetrain 2 is not mandatory, and instead the intake valve(s) may be actuated in any other manner, for example by any known variable or non-variable camshaft system. The supply of intake gas may also be regulated in any known manner, for example by using a throttle valve. In this case, the additional gas supply system 160 may be a bypass system receiving intake gas from upstream of the throttle valve (but possibly from a separate air filter or from the same air filter as the inlet duct 170).

The intake system 1 may also be used in combination with a (turbo-)charged combustion engine. In this case, both the inlet duct 170 and the additional gas supply system 160 may be provided for receiving inlet gas from a charged (pressurized) gas manifold.

Also the actuation of the flow control slider 180 may be implemented in any other manner than the one shown in the Figures, for example by an (electronic) linear actuation element. In case of a variable valvetrain, the actuation may be coupled to a lift height adjustment mechanism as shown in Figs. 3 and 5 to 6, or it may be actuated separately therefrom.

### Description of further aspects of the invention

Next, general aspects of the invention are described. These general aspects may be used in any of the embodiments described herein, but may also be used independently from such embodiment. Still, for purposes of illustration, the reference numbers of Figs. 1 to 6 are mentioned in brackets for the purpose of illustration. Each aspect or embodiment may be combined with any other aspect or embodiment unless the combination is excluded.

According to an aspect, an intake system (1) for an internal combustion engine is provided. The intake system comprises an intake valve (70) for controlling the flow of a combustion gas into a cylinder of the internal combustion engine; a valvetrain (2) for actuating the intake valve (70); an inlet duct (170) leading to the intake valve (70) for guiding the combustion gas via the intake valve to the cylinder; a slider cavity (164) arranged at a side wall (172) of the inlet duct; a flow control slider (180) being accommodated in the slider cavity (164) and being translationally slidable between an extended position and a retracted position, and an additional gas supply system (160) passing through the slider cavity (164). In the extended position, the flow control slider (180) extends with a protruding portion (185) from the slider cavity (164) into the inlet duct (170) for shaping a flow of the combustion gas. In the retracted position, the flow control slider (180) is retracted, relative to the extended position, into the slider cavity (164).

Next, aspects relating to the variable valvetrain (2) are described.

According to an aspect, the valvetrain is adapted for continuously adjusting a valve lift of the intake valve (70). According to a further aspect, the valvetrain is adapted to be arranged in a cylinder head (3) portion of the internal combustion engine. According to a further aspect, the valvetrain comprises an actuation system for periodically opening and closing the valve (70), the actuation system comprising a rotatable valve crank (16), and and a transmission unit for transmitting the rotational movement of the valve crank (16) into a periodical lifting movement for actuating the valve (70). According to a further aspect, the valve crank (16) is rotatably mounted about a valve crank axis (14) by a valve crank bearing (15), the valve crank bearing (15) connecting the valve crank (16) to a rigid support body (80). According to a further aspect, the support body (80) is mounted on a pivot shaft (23) to be pivotable about a pivot axis (24), wherein pivoting of the support body (80) about the pivot axis (24) causes a change in the position of the valve crank axis (14) along a circle segment about the pivot axis (24) for adjusting the valve lift.

According to a further aspect, the transmission unit comprises a connecting rod (30) with a first joint (34) and a second joint (36), and a guiding member (60) for guiding the connecting rod, the guiding member being mounted on a guiding member shaft (63) to be pivotable about a guiding member axis (66). According to a further aspect, the connecting rod (30) is joined with its first joint (34) to the valve crank (16), and the connecting rod (30) is joined with its second joint (36) to the guiding member (60).

According to a further aspect, the transmission unit further comprises a pushing member (40) fastened to the guiding member (60), and a transmission member (50) in mechanical contact with the pushing member (40) along a contact surface (54) for transmitting a force exerted by the pushing member (40) towards the valve (70).

Further aspects of the variable valvetrain are described EP 0521921 A1 and the related publications cited further above, all of which are incorporated by reference herein.

Next, aspects regarding the flow control slider (180) are described.

According to an aspect, the protruding portion (185) is shaped as a nozzle element for constricting the inlet duct cross section; is adapted for generating a turbulent flow and/or a tumble flow when the flow control slider (180) is positioned in the extended position.

According to a further aspect, the flow control slider (180) is flat (in particular, defininig a plane containing the direction of movement between the extended and retracted position).

According to a further aspect, the movement between the extended and retracted position is a translational movement along a straight axis (straight, i.e., non-curved translational movement).

According to a further aspect, a distal portion (184) of the flow control slider (180) is flush with the side wall of the inlet duct (170) when the flow control slider (180) is positioned in the retracted position.

Next, aspects regarding the additional gas supply system (160) passing through the slider cavity are described.

According to a further aspect, the flow control slider (180) is arranged for blocking an additional gas flow through the additional gas supply system (160) into the inlet duct (170) when positioned in the retracted position, and for allowing an additional gas flow through the additional gas supply system (160) into the inlet duct (170) when positioned in the extended position.

According to a further aspect, the flow control slider (180) comprises a channel recess (182) (extending along the direction of movement between the extended and retracted position), the channel recess (182) defining a channel for the additional gas flow into the inlet duct (170) when positioned in the extended position.

According to a further aspect, the channel recess (182) is arranged at an upstream face of the flow control slider (180) relative to the direction of inlet gas flow along the inlet duct (170).

According to a further aspect, the channel recess (182) is tapered with a smaller cross section at a distal end and a larger cross section at a proximal end.

According to a further aspect, the additional gas supply system may be or include an exhaust gas recirculation system transporting exhaust gas received from an exhaust portion of the internal combustion engine, and/or an additional inlet gas channel receiving inlet gas (such as air).

According to a further aspect, the additional inlet gas channel is a bypass channel receiving inlet gas (air) from an upstream branching portion of the intake system, the upstream branching portion being preferably arranged upstream of a throttle valve and/or fuel injector of the intake system and/or downstream of an air filter of the intake system.

According to a further aspect, the additional inlet gas channel is an inlet receiving air from an air filter, in particular an activated carbon filter (which may be the same as or different from the inlet duct (170)).

According to a further aspect, the additional inlet gas channel has a smaller cross-section than the main inlet gas channel (defined as the smalles cross-section / at the cross-section at the side wall). This may be the case in any position of the flow control slider (180); in some positions the cross-section of the additional inlet gas channel may even be zero.

According to a further aspect, the flow control slider (180) (the slider cavity) may be arranged at a convexly curved portion of the inlet duct (170).

According to a further aspect, the flow control slider (180) is arranged at an angle of 0-45° with respect to a cylinder head base surface (plane defined by the interface to motor block; the cylinder axis; plane normal to a piston axis).

According to a further aspect, the flow control slider (180) is arranged at a distance from the intake valve (70) (e.g., from the valve seat) of at most 60 mm.

According to a further aspect, the flow control slider (180) is arranged closer to intake valve (70) than 3 *DV, and preferably closer than DV, wherein DV is a diameter of the intake valve 70.

According to a further aspect, the sliding displacement between the extended position and the retracted position of the flow control slider (180) is at least 5 mm and at most 30 mm, and/or at least 10% of an inlet duct diameter and at most 40% of the inlet duct diameter.

Next, aspects regarding the actuation of the flow control slider (180) are described.

According to an aspect, the flow control slider (180) has a stopper (186) for limiting a movement into the inlet duct beyond the extended position.

According to a further aspect, the intake system (1) further comprises an actuator system (190) for actuating the movement of the flow control slider (180) between the extended position and the retracted position.

According to a further aspect, the actuator system (190) is coupled to the variable valvetrain for actuating the movement of the flow control slider (180) in dependence of the adjusted valve lift, and wherein in particular wherein the actuator system (190) is coupled to the pivotable support body (80) for actuating the movement of the flow control slider (180) in dependence of the position of the support body (80).

According to a further aspect, the actuator system comprises a rotatable actuation shaft (192) and a transmission system (191) for transmitting a rotation of the actuation shaft (192) into a translational sliding motion of the flow control slider (180).

According to a further aspect, the transmission system (191) comprises a crank eccentrically fixed to the actuation shaft (192) and connected to the flow control slider (180).

According to a further aspect, the actuation shaft (192) is spaced apart from the inlet duct (170), preferably by at least 50 mm. According to a further aspect, the actuation shaft (192) is spaced apart from the intake valve (70), preferably by at least 50 mm.

According to a further aspect, the actuation shaft (192) is coupled to the variable valvetrain for being rotated by an adjustment of the valve lift, in particular by a pivoting of the support body (80).

According to a further aspect, the control slider is activated by a (electronic) linear actuation element independent from valve train actuation.

According to a further aspect, the actuation shaft (192) is coupled to the support body (80) by an actuation rod (196) imparting (e.g., via a crank (194)) a rotation of the actuation shaft (192) when the support body (80) is pivoted.

According to a further aspect, the transmission system (191) is configured for transmitting a rotation of the (single) actuation shaft (192) into a translational sliding motion of the plurality of flow control sliders (180).

Next, aspects regarding integration with the engine are described.

According to a further aspect, the intake system (1) is configured to be arranged in a cylinder head (3) portion of the internal combustion engine.

According to a further aspect, the intake system (1) comprises a cylinder head (3) for the internal combustion engine, and wherein the inlet duct (170) and the slider cavity (164) are provided within the cylinder head (3).

According to a further aspect, the intake system (1) comprises a plurality of intake valves (70) and a plurality of inlet ducts (170) with a plurality of respective flow control sliders (180).

According to a further aspect, the intake system (1) comprises a pair of first and second intake valves (70, 70') for controlling the flow of a combustion gas into the same cylinder of the internal combustion engine and a pair of first and second inlet ducts leading to the first and second intake valves (70, 70'), and a pair of first and second flow control sliders (180, 180') accommodated in a respective slider cavity (164) in a side wall of the first and second inlet duct, respectively.

According to a further aspect, the pair of first and second flow control sliders (180, 180') are rigidly connected to each other. According to a further aspect, the pair of first and second flow control sliders (180, 180') are asymmetrical with respect to each other. According to a further aspect, the first flow control slider (180) has a channel recess (182) not present in the second flow control slider (180').

Further aspect of the invention are also directed to an internal combustion engine comprising an intake system according to any aspect or embodiment described herein. According to an aspect, the intake system and in particular a variable valvetrain thereof are arranged in a cylinder head (3) portion of the internal combustion engine.

While the foregoing is directed to embodiments, other and further embodiments may be devised without departing from the basic scope determined by the claims.

## Claims

1. An intake system (1) for an internal combustion engine, the intake system comprising:
an intake valve (70) for controlling a flow of a combustion gas into a cylinder of the internal combustion engine;
a valvetrain (2) for actuating the intake valve (70);
an inlet duct (170) leading to the intake valve (70) for guiding the combustion gas via the intake valve to the cylinder;
a slider cavity (164) arranged at a side wall (172) of the inlet duct;
a flow control slider (180) being accommodated in the slider cavity (164) and being translationally slidable between an extended position and a retracted position; and
an additional gas supply system (160) passing through the slider cavity (164), wherein
in the extended position, the flow control slider (180) extends with a protruding portion (185) from the slider cavity (164) into the inlet duct (170) for shaping a flow of the combustion gas, and
in the retracted position, the flow control slider (180) is retracted, relative to the extended position, into the slider cavity (164).

2. The intake system (1) according to claim 1, wherein the valvetrain being at least one of the following:
- A variable valvetrain adapted for continuously adjusting a valve lift of the intake valve (70);
- adapted to be arranged in a cylinder head (3) portion of the internal combustion engine;
- the valvetrain comprising:
- an actuation system for periodically opening and closing the valve (70), the actuation system comprising at least one of a rotatable valve crank (16); and a transmission unit for transmitting the rotational movement of the valve crank (16) into a periodical lifting movement for actuating the valve (70), wherein preferably, the valve crank (16) is rotatably mounted about a valve crank axis (14) by a valve crank bearing (15), the valve crank bearing (15) connecting the valve crank (16) to a rigid support body (80)
- the support body (80) is mounted on a pivot shaft (23) to be pivotable about a pivot axis (24), wherein pivoting of the support body (80) about the pivot axis (24) causes a change in position of the valve crank axis (14) along a circle segment about the pivot axis (24) for adjusting the valve lift;
- the transmission unit comprises:
- a connecting rod (30) with a first joint (34) and a second joint (36), and
- a guiding member (60) for guiding the connecting rod, the guiding member being mounted on a guiding member shaft (63) to be pivotable about a guiding member axis (66), wherein
preferably, the connecting rod (30) is joined with its first joint (34) to the valve crank (16), and the connecting rod (30) is joined with its second joint (36) to the guiding member (60);
- the transmission unit further comprises
- a pushing member (40) fastened to the guiding member (60), and
- a transmission member (50) in mechanical contact with the pushing member (40) along a contact surface (54) for transmitting a force exerted by the pushing member (40) towards the valve (70).

3. The intake system (1) according to any one of the preceding claims, wherein the protruding portion (185) is shaped as a nozzle element for constricting the inlet duct cross section and/or is adapted for generating a turbulent flow and/or a tumble flow when the flow control slider (180) is positioned in the extended position.

4. The intake system (1) according to any one of the preceding claims, wherein a distal portion (184) of the flow control slider (180) is flush with the side wall of the inlet duct (170) when the flow control slider (180) is positioned in the retracted position.

5. The intake system (1) according to any one of the preceding claims, wherein the flow control slider (180) is arranged for at least partially blocking an additional gas flow through the additional gas supply system (160) into the inlet duct (170) when positioned in the retracted position, and for allowing an additional gas flow through the additional gas supply system (160) into the inlet duct (170) when positioned in the extended position.

6. The intake system (1) according to claim 5, wherein the flow control slider (180) comprises a channel recess (182), the channel recess (182) defining a channel for the additional gas flow into the inlet duct (170) when positioned in the extended position, wherein the channel recess (182) is preferably arranged at an upstream face of the flow control slider (180) relative to the direction of inlet gas flow along the inlet duct (170).

7. The intake system (1) according to any one of the preceding claims, wherein the flow control slider (180) is arranged at a distance from the intake valve (70) of at most 60 mm.

8. The intake system (1) according to any one of the preceding claims, wherein the intake system (1) further comprises an actuator system (190) for actuating the movement of the flow control slider (180) between the extended position and the retracted position.

9. The intake system (1) according to claim 8, wherein the actuator system (190) is coupled to a variable valvetrain for actuating the movement of the flow control slider (180) in dependence of an adjusted valve lift of the variable valvetrain.

10. The intake system (1) according to claim 8 or 9, wherein the actuator system comprises a rotatable actuation shaft (192) and a transmission system (191) for transmitting a rotation of the actuation shaft (192) into a translational sliding motion of the flow control slider (180), and preferably a crank eccentrically fixed to the actuation shaft (192) and connected to the flow control slider (180).

11. The intake system (1) according to claim 10, wherein the actuation shaft (192) is spaced apart from the inlet duct (170), preferably by at least 50 mm.

12. The intake system (1) according to any one of the claims 10 to 11, wherein the intake system (1) comprises a plurality of intake valves (70) and a plurality of inlet ducts (170) with respective flow control sliders (180), wherein the transmission system (191) is configured for transmitting a rotation of the actuation shaft (192) into a translational sliding motion of the flow control sliders (180).

13. The intake system (1) according to claim 8 or 9, wherein the actuator system (190) comprises a linear actuation element coupled to the flow control slider (180).

14. The intake system (1) according to any one of the preceding claims, wherein the intake system (1) comprises a plurality of intake valves (70) and a plurality of inlet ducts (170) with a plurality of respective flow control sliders (180), and wherein the pair of first and second flow control sliders (180, 180') are asymmetrical with respect to each other, and wherein preferably the first flow control slider (180) has a channel recess (182) not present in the second flow control slider (180').

15. Internal combustion engine comprising an intake system according to any one of the preceding claims.
